# EUROPÄISCHE PATENTSCHRIFT

(11) **EP 1 254 567 B1**
(45) Veröffentlichungstag und Bekanntmachung des Hinweises auf die Patenterteilung: **12.11.2003**
(21) Anmeldenummer: 01919267.3
(22) Anmeldetag: 07.02.2001
(51) Int. Cl.: H04N 7/18, H04N 17/00

(54) **VERFAHREN UND VORRICHTUNG ZUR ERKENNUNG VON FEHLERN IN SIGNALVERARBEITUNGSANLAGEN DER SICHERHEITSTECHNIK**
METHOD AND DEVICE FOR IDENTIFYING ERRORS IN SIGNAL PROCESSING SYSTEMS USED IN THE FIELD OF SECURITY TECHNOLOGY
PROCEDE ET DISPOSITIF PERMETTANT DE DETECTER DES ERREURS DANS DES SYSTEMES DE TRAITEMENT DE SIGNAL FAISANT PARTIE DU DOMAINE DE LA SECURITE

(30) Priorität: 11.02.2000 DE 10006091
(43) Veröffentlichungstag der Anmeldung: 06.11.2002
(73) Patentinhaber: plettac AG, 58840 Plettenberg (DE)
(72) Erfinder: PFÄNDER, Werner, 90768 Fürth (DE)
(74) Vertreter: Pröll, Jürgen, Dipl.-Ing.
(86) Internationale Anmeldenummer: EP0101294
(87) Internationale Veröffentlichungsnummer: WO01060074

(56) Entgegenhaltungen:
- EP-A- 1 045 588
- DE-A- 4 339 075
- DE-A- 19 517 536

## Beschreibung

Die Erfindung betrifft ein Verfahren und eine Vorrichtung zur Erkennung von Fehlern in Signalverarbeitungsanlagen der Sicherheitstechnik.

Ein Videoüberwachungssystem besteht, in seiner einfachsten Form, aus einer Kameraeinheit, einer Übertragungsstrecke, einer Empfängereinheit sowie einer Anzeigeeinheit. Die Kameraeinheit erfaßt den zu überwachenden Bildbereich und übersendet die Videosignale über die Übertragungsstrecke an die Empfängereinheit, deren Signalverarbeitungseinheit die Signale für die Bildanzeigeeinheit aufbereitet. Die Bildanzeigeeinheit bildet dann die von der Videokamera aufgenommene Szene ab.
Bei bisherigen rein analogen Systemen wurde ein Übertragungsfehler sofort ersichtlich, da das Bildsignal gestört oder gar nicht vorhanden war. Bei heutigen neueren Systemen, welche innerhalb des Videosignalweges digitale Elemente benutzen, sind verschiedene Bildspeichervorrichtungen vorgesehen. Es kann nun dazu kommen, daß in der Bildspeichervorrichtung ein Fehler auftritt. Beispielsweise wird das aktuelle Videosignal nicht mehr in die Bildspeichervorrichtung übertragen, das alte, noch in der Bildspeichervorrichtung gespeicherte Videosignal ist jedoch noch vorhanden. Dieses Videosignal wird nun stetig aus der Bildspeichervorrichtung ausgelesen, übertragen und auf der Anzeigeeinheit dargestellt. Bei der Betrachtung der Anzeigeeinheit ist nun nicht mehr sofort erkennbar, ob es sich um ein tatsächlich aktuell von der Kameraeinheit aufgenommenes Videosignal oder um ein in der Bildspeichervorrichtung gespeichertes, nicht aktualisiertes Videosignal handelt.

Dies hat zur Folge, daß quasi ein "Standbild" übertragen wird, der Nutzer der Anlage dieses jedoch nicht sofort erkennt oder bei flüchtiger Betrachtung übersieht. Die Überwachung geht folglich fehl.

Eine Einrichtung mit einer Videoüberwachungseinheit ist aus DE-A-195 17 536 bekannt. Diese Einrichtung ist insbesondere zur Verkehrsüberwachung geeignet. Die Einrichtung besteht aus einer Videokamera, welche mit einem exakt synchronisierten Zeitgeber verbunden ist. In jedes Einzelbild des Videostreifens wird beim Abspeichem des Videosignals das Zeitsignal eingeblendet.
Hierbei handelt es sich jedoch um keine Echtzeitübertragung, sondern um eine Aufzeichnung. Die Probleme der Echtzeitübertragung bleiben bei dieser Erfindung außer Betracht.

Aus DE-C-4339075 ist ein Verfahren sowie eine Kameraüberwachungsvorrichtung zur Erzeugung eines digitalen Bildes bekannt. Das digitale Bild wird mit Hilfe einer Überwachungskameravorrichtung erzeugt. Ein von der Videokamera geliefertes Bild wird in digitale Bildinformationen umgesetzt. Die zusätzlich zu einer Information des Bildinhaltes notwendigen zeitlichen und räumlichen Identifikationsmerkmale werden in der Bildinformation in einem Bildspeicher der Übertragungskameravorrichtung gespeichert. Zum Nachweis der Ursprünglichkeit des Bildes wird in einem Prozessor, der nach Außen hin nicht zugänglich ist, anhand eines vorgegebenen Algorithmusses aus dem Bildinhalt und der Zusatzinformation wenigstens eine Prüfziffer gebildet und diese Prüfziffer an einer vorgegebenen Stelle des Bildinhaltes eingefügt. Auch hierbei bleibt eine Echtzeitübertragung außer Betracht.

Aus DE-A1-4339075 ist ein Verfahren und ein System zur Erzeugung eines digitalen Bildsignals für Überwachungszwecke bekannt. Bei diesem Verfahren wird ein von einer Video-Kamera geliefertes Bildsignal in eine digitale Bildinformation umgesetzt, in welche zusätzlich zu einem Bildinhalt eine zusätzliche Information zur zeitlichen und räumlichen Identifikation des Bildes einhalten ist und bei dem die Bildinformation auf einem Bildspeicher des Systems gespeichert wird.

Nachteilig bei dieser Erfindung ist jedoch, daß keine automatische Erkennung vorgesehen ist, ob das eingefügte Signals vorhanden ist.

Aus DE-A-195 17 028 ist ein Verfahren zur Erstellung einer Objektmaske für Videoüberwachungsanlagen bekannt. Hierbei wird zunächst eine Objektmaske erstellt. Anhand dieser Objektmaske werden räumliche Objekte vor einem Hintergrund deutlich unterschieden. Das zu überwachende Gebiet wird hierbei von zwei räumlich getrennten Videokameras aufgenommen, so daß eine Stereoaufnahme entsteht. Diese Stereoaufnahme wird anschließend über eine Rechnereinheit verglichen. Zwar handelt es sich hierbei um eine Echtzeitvideoüberwachung, jedoch sind hier keinerlei Überlegungen zu einer Erkennung von fehlerhaftem Verhalten beschrieben.

Keine der bekannten Erfindungen realisiert auf einfache und kostengünstige Art eine Erkennung, ob die Echtzeitvideoüberwachung einer Störung unterliegt.

Aufgabe der Erfindung ist es, eine einfache Vorrichtung für ein Videosystem mit erhöhter Sicherheitsanforderung aufzuzeigen, welches es einem Nutzer ermöglicht, festzustellen, ob die auf einer Anzeigeeinheit dargestellte Szene dem aktuellen von der Videoeinheit aufgenommenen Szene entspricht und die Bildfolgen der Szene fortlaufend, d. h. ohne Unterbrechung, auf der Anzeigeeinheit dargestellt werden.

Diese Aufgabe wird durch die Verfahrensmerkmale des Anspruchs 1, sowie durch ein system mit den Merkmalen des Anspruches 7 gelöst.

Vorteilhafte Ausgestaltungen der Erfindung ergeben sich anhand der weiteren abhängigen Ansprüche, der weiteren Beschreibung sowie der Figuren.

Um die oben genannten Probleme bei bekannten Videoüberwachungssystemen zu vermeiden, wird nunmehr in das Videosignal ein Zusatzsignal eingebracht. Dieses Zusatzsignal wird vor dem ersten Bildspeicher, beispielsweise der Bildspeichereinheit in der Videokamera, eingestanzt. Die Einstanzung erfolgt durch die Steuereinheit der Kameraeinheit. Auf der Anzeigeeinheit wird dieses Videosignal dargestellt.
Als vorteilhaft hat sich gezeigt, dieses Signal als altemierenden Laufbalken oder als Blinksignal anzuzeigen. Für einen Nutzer, der den Bildschirm überwacht, ist somit sofort erkennbar, wenn sich dieses Zusatzsignal nicht verändert, daß ein Standbild und kein Echtzeitvideosignal übertragen wird. Der Nutzer kann somit sofort feststellen, daß ein Fehler in der Übertragungsstrecke vorliegt, insbesondere ein Fehler in einer der Bildspeichereinheiten.

Um jedoch die erfindungsgemäße Vorrichtung weiter zu automatisieren, ist vorgesehen, daß auf der Anzeigeseite dieses Zusatzsignal automatisch überwacht wird. In der Anzeigeeinheit ist eine Detektorschaltung vorgesehen, welche das darzustellende Videosignal überwacht. Die Detektorschaltung überwacht das Videosignal mit dem eingestanzten Zusatzsignal daraufhin, ob sich das Zusatzsignal bei jedem neuen Bildaufbau verändert. Bleibt eine Veränderung aus, so erkennt die Detektorschaltung, daß das Zusatzsignal und folglich auch das Videosignal sich nicht verändert, folglich ein Fehler in der Übertragung vorliegt. In diesem Fall schaltet die Detektorschaltung die Anzeigevorrichtung dunkel. Ein Nutzer kann erkennen, daß die Übertragungsstrecke gestört ist.

In vorteilhafter Weise muß sich das eingestanzte Zusatzsignal nicht bei jedem Bildaufbau verändern. Die Änderung kann vielmehr auch in einem Rhythmus des Vielfachen eines Videobildes erfolgen. Da ein Fehler jedoch möglichst schnell erkannt und signalisiert werden soll, ist eine Wiederholfrequenz von weniger als 1 Hz nicht zweckmäßig.

Als vorteilhaft hat sich im weiteren erwiesen, bei einer Automatisierung der Überwachung das Zusatzsignal in Bildzeilen der Anzeigevorrichtung einzustanzen, welche sich innerhalb der sogenannten Überschreibung befinden. Dies hat zur Folge, daß für den Nutzer innerhalb des Bildaufbaues keine Störungen erkennbar sind.

Es besteht aber auch die Möglichkeit, dieses Zusatzsignal innerhalb der Austastlücke in einer oder mehreren der sogenannten Prüfzeilen zu übertragen. Dies hat zur Folge, daß keinerlei Störung im Bildaufbau erfolgt. Zu beachten ist hierbei allerdings, daß innerhalb der Anzeigeeinheit die erwähnten Prüfzeilen noch nach der letzten Bildspeichereinheit verfügbar sein müssen.

Im weiteren wird die Erfindung anhand von Figuren an einem konkreten Ausführungsbeispiel erläutert.

Es zeigt:

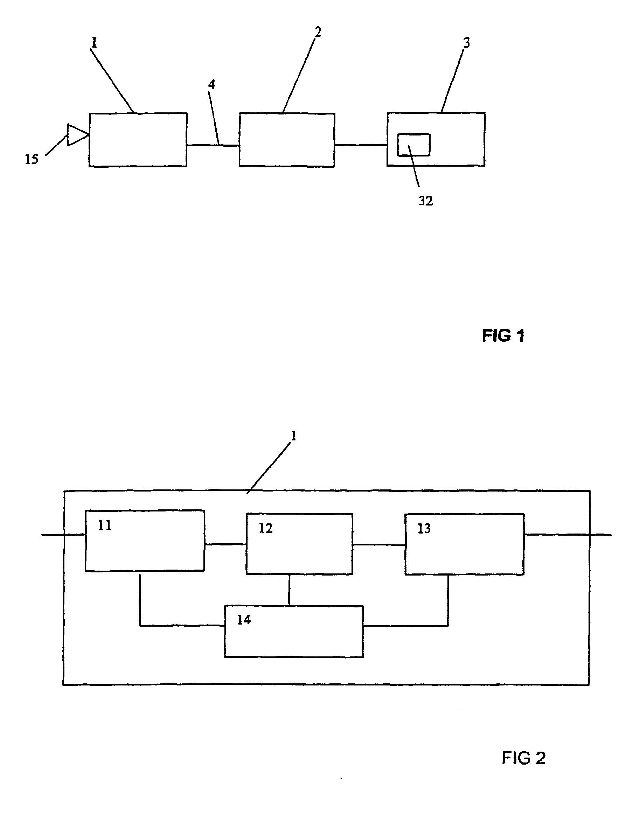

- FIG 1: einen schematischen Aufbau einer Sicherheitsüberwachungsanlage,
- FIG 2: einen schematischen Aufbau einer Kameraeinheit,

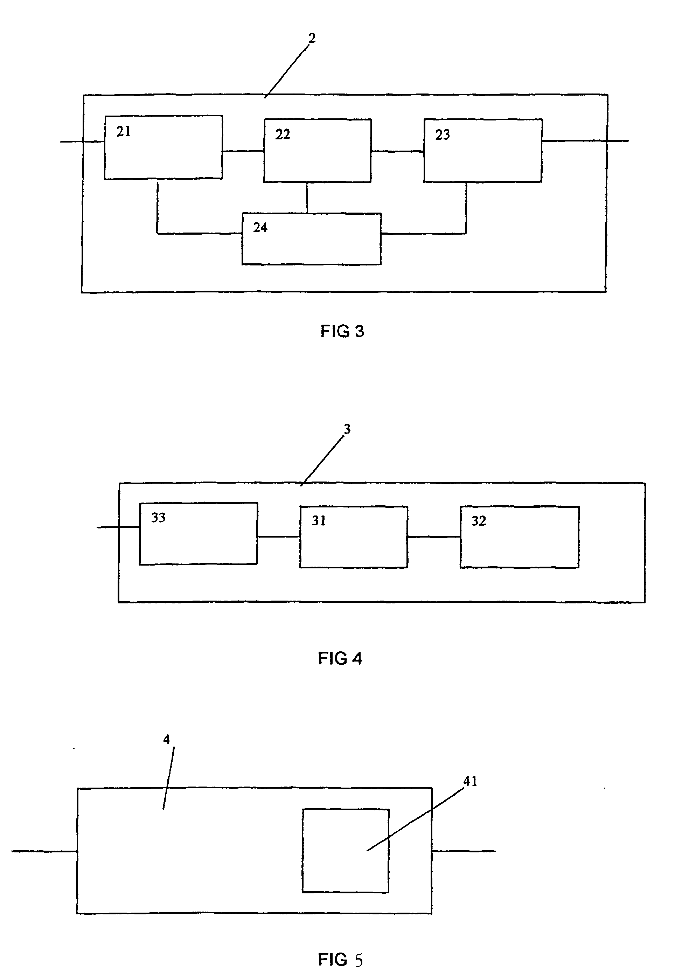

- FIG 3: einen schematischen Aufbau einer Signalverarbeitungseinheit,
- FIG 4: einen schematischen Aufbau einer Anzeigeeinheit und
- FIG 5: einen schematischen Aufbau einer Übertragungsstrecke.

Die Kameraeinheit 1 besteht typischerweise aus einer Aufnahmeeinheit 11, einer Bildspeichereinheit 12, einer Sendeeinheit 13 sowie einer Steuereinheit 14. Die Steuereinheit 14 steuert dabei alle Vorgänge in der gesamten Kameraeinheit 1. Durch die Aufnahmeeinheit 11 wird eine Szene erfaßt. Die Aufnahmeeinheit 11 besteht aus einem Objektiv 15, welches die zu überwachende Szene auf einen lichtempfindlichen Sensor projiziert, aus dem genannten, lichtempfindlichen Sensor, welcher die auf die lichtempfindliche Fläche projizierte Helligkeitsverteilung in elektrische Signale umwandelt und aus einer dem Sensor folgenden ersten Videosignalbearbeitungsstufe.
Als lichtempfindliche Sensoren kommen hierbei alle marktverfügbaren Sensortypen wie CCD, CMOS, TFA, aber auch Elektronenstrahlröhren in Frage.

Die Steuereinheit 14 veranlaßt die Bildspeichereinheit 12, die Bildinformationen aus der Aufnahmeeinheit 11 entweder zeilenweise oder auch bildpunktweise oder in einer im System beliebig anderweitig festgelegten Reihenfolge zwischen zu speichern. Sobald dann ein komplettes Bild vorliegt, veranlaßt die Steuereinheit 14 die Bildspeichereinheit 12, dieses Bild auszugeben und über die Sendeeinheit 13 an die Signalverarbeitungseinheit 2 über eine Übertragungsstrecke 4 zu senden. Die Steuereinheit 14 stanzt nunmehr, bevor die Zwischenspeicherung in der Bildspeichereinheit 12 erfolgt, innerhalb der Aufnahmeeinheit 11 ein Zusatzsignal in das mit dem Bildsensor aufgenommene Videosignal ein, welches in einem einstellbaren Rhythmus verändert wird. Dieses Zusatzsignal ist somit in die gesamte Videoverarbeitungskette eingestanzt.
Das aus der Kameraeinheit 1 kommende Videosignal wird über eine geeignete Übertragungsstrecke 4 übertragen. Diese Übertragungsstrecke 4 kann das Signal in jeder geeigneten Form übertragen, wie analog, digital, über Koaxleitungen, Zweidrahtleitungen, Lichtwellenleitung, Funkstrecken oder auch über moduliertes Licht im Freiraum. Innerhalb der Übertragungsstrecke 4 können sich auch Signalkompressions- bzw. -dekompressionsverfahren befinden. So erfolgt beispielsweise die Komprimierung und Dekomprimierung der Videosignale nach dem MPEG-Verfahren. Innerhalb der Übertragungsstrecke kann sich auch eine Bildspeichereinheit 41 befinden oder mehrere derartiger Einheiten.
Nach der Übertragungsstrecke 4 wird als Videosignal von einer Signalverarbeitungseinheit 2 empfangen. Diese Signalverarbeitungseinheit 2 kann, je nach Anforderung, verschiedenartigste Aufgaben erfüllen, wie D/A-Wandlung, A/D-Wandlung, Leitungsentzerrung, Signalmultiplex, Signalverteilung, Umwandlung der Lichtsignale in elektrische Signale. Abhängig von der Aufgabe, kann in der Signalverarbeitungseinheit 2 auch eine oder mehrere Bildspeichereinheiten 22 vorhanden sein, in welchen das Videosignal zwischengespeichert wird. Nach Bearbeitung und Zwischenspeicherung wird das Videosignal einer Verstärkereinheit 23 zugeführt und von dort an die Anzeigeeinheit 3 weitergeleitet. Die Signalverarbeitungseinheit 2 wird von einer Steuereinheit 24 in allen Funktionen zentral gesteuert.

Die Anzeigeeinheit 3 besteht aus einem Bildschirm 31, einer Detektorschaltung 32 und einer Ansteuerschaltung 33. Die Ansteuerschaltung 33 kann wiederum eine oder mehrere Bildspeichereinheiten 331 enthalten.
Der Bildschirm 31 kann in jeder am Markt verfügbaren Technologie ausgeführt sein, wie z. B. als Katodenstrahl-, LCD-, TFT-Bildschirm bzw. -Display.

Auf der Anzeigeeinheit 3 wird die in Echtzeit von der Kameraeinheit 1 erfaßte Videoszene wiedergegeben. Fest in das Videosignal integriert wird auch das Zusatzsignal übertragen und dargestellt. Bei dem Zusatzsignal handelt es sich beispielsweise um ein altemierendes, visuelles Signal auf dem Bildschirm 31 der Anzeigeeinheit 3. Das Zusatzsignal kann beispielsweise aus einem eingeschränkten, in Lage und Größe bestimmbaren Bildbereich bestehen, der stetig in einem einstellbaren Rhythmus zwischen hell und dunkel wechselt, oder aus einem Laufbalken oder einem laufenden Zeichen (Charakter), das sich innerhalb eines bestimmbaren Bereiches oder auch im gesamten Bereich stetig auf dem Bildschirm 31 der Anzeigeeinheit 3 fortbewegt. Auf diese Weise kann ein Nutzer problemlos erkennen, daß stets eine Änderung im Bild vorliegt, folglich in der gesamten Übertragungsstrecke über alle im System vorhandenen Bildspeichereinheiten hinweg kein Fehler auftritt, sondern daß die von der Kameraeinheit 1 aktuell aufgenommene Szenen auf der Anzeigeeinheit 3 dargestellt wird. Im Falle eines Fehlers, insbesondere eines Speicherfehlers in einer Bildspeichereinheiten 12, 22, 331, 41 würde sich das Zusatzsignal nicht verändern. Ein Nutzer würde wahmehmen, daß am Bildschirm 31 kein sich ständig veränderndes Zusatzsignal in vorangehend beschriebener Ausgestaltung vorhanden ist und so erkennen, daß ein Übertragungsfehler vorliegen muß.

In einer weiteren vorteilhaften Ausgestaltung der Erfindung ist vorgesehen, die Überwachung dieser Echtzeitüberprüfung zu automatisieren. Hierdurch ist in der Anzeigeeinheit 3 eine Detektorschaltung 32 vorgesehen. Diese Detektorschaltung 32 ist nach der Ansteuerlogik 33 angeordnet. Diese Anordnung ist erforderlich, da heutzutage Anzeigevorrichtungen mit 100 Hz betrieben werden. Dies bedeutet, daß das Videosignal in einem Bildspeicher zwischengespeichert wird und doppelt ausgelesen wird. Das Videosignal liegt überlicherweise mit 50 Hz vor, durch die Zwischenspeicherung in der Bildspeichereinheit 331 wird dieses auf 100 Hz gebracht, das Bild wird zweifach nacheinander dargestellt.

Es kann nunmehr auch der Fall sein, daß diese Speichereinrichtung 331 in der Bildanzeigeeinheit 3 einen Fehler aufweist. Das einmal eingelesene Videosignal wird dann nicht erneuert, es wird stetig das gleiche Videosignal dargestellt. Die Detektorschaltung 32 würde dies nunmehr erkennen, da sich das Zusatzsignal nicht verändert, sondern über eine größere Anzahl, als der für das Zusatzsignal eingestellten Wechselfrequenz entsprechender Anzahl, von Bildaufbauten gleich bleibt. In diesem Fall schaltet die Detektorschaltung 32 den Bildschirm 31 der Anzeigevorrichtung dunkel.

Es ist aber auch möglich, daß die Detektorschaltung 32 statt der Dunkeltastung in den Bildschirm 31 eine unmißverständliche Kennzeichnung, beispielsweise einen Text, einblendet oder daß von der Detektorschaltung 32 ein Alarmierungsgerät, z. B. eine Glocke oder ein Blinklicht, außerhalb der Anzeigeeinheit 3 ausgelöst wird.
Im weiteren greift dieser Fehlermechanismus in gleicher Weise auch dann ein, wenn in einem vorherigen Bildspeicher (z B. 12, 22, 41) ein Fehler auftritt.
Ein Nutzer erkennt somit sofort, daß die Übertragung des Videosignals gestört ist und er sich in diesem Fall nicht auf die Videoanlage verlassen darf.

### Bezugszeichenliste

- 1: Kameraeinheit
- 11: Aufnahmeeinheit
- 12: Bildspeichereinheit
- 13: Sendeeinheit
- 14: Steuereinheit
- 15: Objektiv
- 2: Signalverarbeitungseinheit
- 21: Empfängereinheit
- 22: Bildspeichereinheit
- 23: Verstärkereinheit
- 24: Steuereinheit
- 3: Anzeigeeinheit
- 31: Bildschirm
- 331: Bildspeichereinheit
- 32: Detektorschaltung
- 33: Ansteuerlogik
- 4: Übertragungsstrecke
- 41: Bildspeichereinheit

## Patentansprüche

1. Verfahren zur Erkennung von Übertragungsfehlern in einer Überwachungsanlage mit Echtzeitbildübertragung der Sicherheitstechnik, bestehend aus einer Kameraeinheit (1), einer Signalverarbeitungseinheit (2), einer Anzeigeeinheit (3) und einer Übertragungsstrecke (4), wobei auf der Anzeigeeinheit (1) der von der Übertragungskameraeinheit (1) überwachte visuelle Bereich wiedergegeben wird,
**dadurch gekennzeichnet, dass**
in der Kameraeinheit (1) ein sich im Rhythmus von definierten Halbbildern veränderndes Zusatzsignal in das von der Kameraeinheit (1) aufgenommene Videosignal vor einer ersten Bildspeichereinheit (12) eingestanzt wird, die Zahl der Halbbilder mindestens eins beträgt und zu höheren Werten dadurch begrenzt ist, dass eine nachfolgende automatische Auswertung wenigstens innerhalb einer in Sicherheitsanlagen verträglichen Zeit reagieren soll und in der Anzeigeeinheit (3) eine Detektorschaltung (31) angeordnet ist, von welcher dieses eingestanzte Signal detektiert und überwacht wird und, wenn sich das eingestanzte Signal nicht in der festgelegten Wechselfrequenz verändert, dies gemeldet wird.

2. Verfahren nach Anspruch 1,
**dadurch gekennzeichnet, dass**
im Falle der Nichtänderung des eingestanzten Signals in der festgelegten Wechselfrequenz die Anzeigeeinheit (3) dunkel schaltet wird.

3. Verfahren nach Anspruch 1 oder 2,
**dadurch gekennzeichnet, dass**
auf der Anzeigeeinheit (3) bei Fehlererkennung von der Detektorschaltung (32) eine visuelle Kennzeichnung in das vorliegenden Videosignal eingestanzt wird und/oder die visuelle Kennzeichnung von einem Nutzer erkennbar ist und als blinkender Text oder Balken auf der Anzeigeeinheit (3) dargestellt wird.

4. Verfahren nach Anspruch 1 oder 2,
**dadurch gekennzeichnet, dass**
bei Fehlererkennung von der Detektorschaltung (31) eine auffällige Alarmierung durch ein externes Gerät ausgelöst wird und/oder das externe Gerät als Hupe, Sirene, Glocke oder Blinklicht realisiert wird.

5. Verfahren nach Anspruch 1 oder 2,
**dadurch gekennzeichnet, dass**
das sich verändemde Zusatzsignal in eine oder mehrere sogenannte Prüfzeilen innerhalb der Bildaustastlücke eingestanzt wird oder das sich verändernde Signal in den ersten sichtbaren auf der Anzeigeneinheit (3) noch in der sogenannten Überschreibung befindenden Zeilen des Videosignals eingestanzt wird.

6. Verfahren nach Anspruch 5,
**dadurch gekennzeichnet, dass**
das Videosignal von der Detektorschaltung (32) nach der letzten im gesamten System vorhandenen Bildspeichereinheit (331) überwacht wird.

7. Videoüberwachungssystem der Sicherheitstechnik bestehend aus einer Kameraeinheit (1), einer Übertragungsstrecke (4), einer Signalverarbeitungseinheit (2) und einer Anzeigeneinheit (3), wobei die Kameraeinheit (1) aus einer Aufnahmeeinheit (11), einer Bildspeichereinheit (12), einer Sendeeinheit (13) und einer ersten Steuereinheit (14) besteht, die Signalverarbeitungseinheit (2) aus einer Empfängereinheit (21), einer zweiten Bildspeichereinheit (22), einer zweiten Steuereinheit (24) und einer Verstärkereinheit (23) besteht und die Signalverarbeitungseinheit (2) mit der Anzeigeneinheit (3), welche einen Bildschirm (31) und eine zugehörige Ansteuerlogik (33) des Bildschirms (31) mit einer dritten Bildspeichereinheit (331) aufweist, verbunden ist, wobei die erste Steuereinheit (14) die Kameraeinheit (1) steuert und die Übertragungsstrecke (4) eine vierte Bildspeichereinheit (41) enthält,
**dadurch gekennzeichnet, dass**
die erste Steuereinheit (14) vor der ersten Bildspeichereinheit (12) ein bei jeder Bildaufzeichnung sich mit einer festgelegten Wechselfrequenz veränderndes Zusatzsignal in das von der Aufnahmeeinheit (11) erfaßte Videosignal einstanzt, die Steuereinheit (14) das Videosignal in der ersten Bildspeichereinheit (12) zwischenspeichert und über die Sendeeinheit (13) über die Übertragungsstrecke (4) an die Signalverarbeitungseinheit (2) überträgt, die Signalverarbeitungseinheit (2) dieses Signal für die Anzeigeneinheit (3) aufbereitet und die Anzeigeeinheit (3) das Videosignal mit dem Zusatzsignal auf den Bildschirm (31) darstellt und eine Detektorschaltung (32) nach der Ansteuerlogik (33) des Bildschirms (31) der Anzeigeeinheit (3) angeordnet ist, welche das eingestanzte Zusatzsignal detektiert und ein Alarmsignal ausgibt, wenn sich das eingestanzte Zusatzsignal nicht mit der für das gesamte System festgelegten und in der Aufnahmeeinheit (11) erzeugten Wechselfrequenz ändert.

8. Videoüberwachungssystem nach Anspruch 7,
**dadurch gekennzeichnet, dass**
die Detektorschaltung (32) den Bildschirm (31) der Anzeigeeinheit (3) dunkel schaltet, wenn sich das eingestanzte Zusatzsignal nicht mit der für das gesamte Wechselsystem festgelegten und in der Aufnahmeeinheit (11) erzeugten Wechselfrequenz ändert.

9. Videoüberwachungssystem nach Anspruch 7 oder 8,
**dadurch gekennzeichnet, dass**
die erste Steuereinheit (14) das Zusatzsignal in den auf der Anzeigeeinheit (3)sichtbaren Bereich des Videosignals einstanzt oder die erste Steuereinheit (14) das Zusatzsignal in den ersten Zeilen des sichtbaren Bereiches des Videosignals einstanzt und diese Zeilen sich aber noch in der sogenannten Überschreibung der Anzeigeneinheit (3) befinden.

10. Videoüberwachungssystem nach einem der Ansprüche 7 bis 9,
**dadurch gekennzeichnet, dass**
das Zusatzsignal ein alternierendes Signal oder ein Blinksignal mit genau festlegbarer Wechselfrequenz ist.

11. Videoüberwachungssystem nach einem der Ansprüche 7 bis 10,
**dadurch gekennzeichnet, dass**
die erste Steuereinheit (14) das Zusatzsignal mit mindestens einer der in der Normung für derartige Videosignale gültigen genau bezeichneten Prüfzeilen innerhalb der Ausgangslücke des Videosignals einstanzt.

12. Videoüberwachungssystem nach einem der Ansprüche 7 bis 11,
**dadurch gekennzeichnet, dass**
die Wechselfrequenz um einen Faktor niedriger ist, als die in der verwendeten Videonorm des Überwachungssystems vorgegebenem Bildwechselfrequenz, wobei der Faktor bei automatischer Auswertung mindestens den Wert eins hat und maximal durch die automatische Auswertung innerhalb einer in Sicherheitsanlagen verträglichen Zeit begrenzt wird und bei visueller Auswertung deutlich größer als der Wert eins sein muss, damit eine Wechselfrequenz entsteht, die vom menschlichen Auge gut erkennbar und auswertbar ist.

13. Videoüberwachungssystem nach einem der Ansprüche 7 bis 12,
**dadurch gekennzeichnet, dass**
die Detektorschaltung (31) auf dem Bildschirm (33) der Anzeigeeinheit (3) eine visuelle Kennzeichnung in das vorliegende Bild einsetzt und die visuelle Kennzeichnung ein blinkender Text ist.

14. Videoüberwachungssystem nach einem der Ansprüche 7 bis 13,
**dadurch gekennzeichnet, dass**
die Detektorschaltung (31) ein externes Alarmierungsgerät auslöst und das externe Alarmierungsgerät eine Hupe, Sirene, Glocke oder Blinklicht ist.

15. Videoüberwachungssystem nach einem der Ansprüche 7 bis 14,
**dadurch gekennzeichnet, dass**
die Übertragungsstrecke (4) eine beliebige in der Videoübertragungstechnik bekannte Strecke sein kann, wobei eine herkömmliche Kabelstrecke in Koax-, oder auch Zweidrahtausführung, als Funkübertragungsstrecke, Übertragungsstrecke mit moduliertem Licht im Freiraum oder Lichtwellenleiterstrecke ausgestaltet ist und die Übertragung sowohl in analoger als auch in digitaler Technik erfolgt und innerhalb der Übertragungsstrecke bekannte Signal-Komprimierungsverfahren und Signaldekomprimierungsverfahren angewendet werden.

16. Videoüberwachungssystem nach Anspruch 15,
**dadurch gekennzeichnet, dass**
die Übertragungsstrecke mit moduliertem Licht, Infrarotlicht oder ultraviolettem Licht arbeitet und/oder die Signal-Komprimierung und/oder - dekomprimierung nach dem MPEG-Verfahren arbeiten.

17. Videoüberwachungssystem nach einem der Ansprüche 7 bis 16,
**dadurch gekennzeichnet, dass**
die Aufnahmeeinheit (11) eine Wandlereinheit zur Umwandlung von optischen Bildinformationen in elektrische Signale aufweist und die Umwandlung mittels Bildsensoren erfolgt und die Bildsensoren nach der CCD-, CMOS-, TFA- oder Kathodenstrahltechnik arbeiten.

## Claims

1. Method for detecting transmission errors in a surveillance installation with real-time picture transmission in security technology, comprising a camera unit (1), a signal-processing unit (2), a display unit (3) and a transmission link (4), wherein the visual area under surveillance by the transmission camera unit (1) is reproduced on the display unit (3), **characterized in that** an additional signal varying in time with defined fields is inserted in the camera unit (1) into the video signal recorded by the camera unit (1) upstream of a first picture memory unit (12), the number of fields is at least one and is limited towards higher values **in that** a downstream automatic evaluation is intended to respond at least within a time acceptable in security installations and a detector circuit (31) that detects and monitors said inserted signal is disposed in the display unit (3) and, if the inserted signal does not vary in the specified replacement frequency, reports this fact.

2. Method according to Claim 1, **characterized in that**, in the event that the inserted signal does not change in the specified replacement frequency, the display unit (3) is blanked.

3. Method according to Claim 1 or 2, **characterized in that**, if an error is detected by the detector circuit (32), a visual indicator is inserted into the video signal present on the display unit (3) and/or the visual indicator is detectable by a user and is displayed as a flashing text or bar on the display unit (3).

4. Method according to Claim 1 or 2, **characterized in that**, if an error is detected by the detector circuit (31), a conspicuous alarm signal is triggered by an external appliance and/or the external appliance is implemented as a horn, siren, bell or flashing light.

5. Method according to Claim 1 or 2, **characterized in that** the varying additional signal is inserted into one or more so-called test lines within the field blanking gap or the varying signal is inserted into the first visible lines of the video signal situated on the display unit (3) still in the so-called overwriting.

6. Method according to Claim 5, **characterized in that** the video signal is monitored by the detector circuit (32) after the last picture memory unit (331) present in the entire system.

7. Video monitoring system in security technology, comprising a camera unit (1), a transmission link (4), a signal-processing unit (2) and a display unit (3), wherein the camera unit (1) comprises a recording unit (11), a picture memory unit (12), a transmitting unit (13) and a first control unit (14), the signal-processing unit (2) comprises a receiving unit (21), a second picture memory unit (22), a second control unit (24) and an amplifier unit (23), and the signal-processing unit (2) is connected to the display unit (3), which has a display screen (31) and an associated drive logic (33) of the display screen (31) with a third picture memory unit (331), wherein the first control unit (14) controls the camera unit (1) and the transmission link (4) contains a fourth picture memory unit (41), **characterized in that**, upstream of the first picture memory unit (12), the first control unit (14) inserts an additional signal that varies during every picture recording at a specified replacement frequency into the video signal picked up by the recording unit (11), the control unit (14) temporarily stores the video signal in the first picture memory unit (12) and transmits it via the transmitting unit (13) via the transmission link (4) to the signal-processing unit (2), the signal-processing unit (2) conditions said signal for the display unit (3) and the display unit (3) displays the video signal with the additional signal on the display screen (31) and a detector circuit (32) is disposed downstream of the drive logic (33) of the display screen (31) of the display unit (3), which detector circuit detects the inserted additional signal and emits an alarm signal if the inserted additional signal does not change at the replacement frequency specified for the entire system and generated in the recording unit (11).

8. Video monitoring system according to Claim 7, **characterized in that** the detector circuit (32) blanks the display screen (31) of the display unit (3) if the inserted additional signal does not change at the replacement frequency specified for the entire replacement system and generated in the recording unit (11).

9. Video monitoring system according to Claim 7 or 8, **characterized in that** the first control unit (14) inserts the additional signal into that area of the video signal visible on the display unit (3) or the first control unit (14) inserts the additional signal in the first lines of the visible area of the video signal and said lines are, however, still situated in the so-called overwriting of the display unit (3).

10. Video monitoring system according to any one of Claims 7 to 9, **characterized in that** the additional signal is an alternating signal or a flashing signal with a precisely specifiable replacement frequency.

11. Video monitoring system according to any one of Claims 7 to 10, **characterized in that** the first control unit (14) inserts the additional signal with at least one of those test lines within the blanking gap of the video signal valid in the standardization for such video signals and precisely designated.

12. Video monitoring system according to any one of Claims 7 to 11, **characterized in that** the replacement frequency is a factor lower than the picture frequency specified in the video standard used for the monitoring system, wherein the factor has at least the value of one when automatically evaluated and is limited as a maximum by the automatic evaluation within a time acceptable in security installations and, in the case of visual evaluation, must be markedly greater than the value one so that a replacement frequency is produced that is readily detectable and capable of evaluation by the human eye.

13. Video monitoring system according to any one of Claims 7 to 12, **characterized in that** the detector circuit (31) inserts a visual indicator in the current picture on the display screen (33) of the display unit (3) and the visual indicator is a flashing text.

14. Video monitoring system according to any one of Claims 7 to 13, **characterized in that** the detector circuit (31) triggers an external alarming appliance and the external alarming appliance is a horn, siren, bell or flashing light.

15. Video monitoring system according to any one of Claims 7 to 14, **characterized in that** the transmission link (4) can be any link known in video transmission technology, wherein a conventional cable link is configured in coax design or, alternatively, two-wire design, as a radio transmission link, as a transmission link employing modulated light in free space or an optical waveguide link and the transmission takes place both in analog and digital technology and known signal compression methods and signal decompression methods are used within the transmission link.

16. Video transmission system according to Claim 15, **characterized in that** the transmission link employs modulated light, infrared light or ultraviolet light and/or the signal compression and/or decompression employs the MPEG method.

17. Video monitoring system according to any one of Claims 7 to 16, **characterized in that** the recording unit (11) has a converter unit for converting optical picture information items into electrical signals and the conversion takes place by means of image sensors and the image sensors employ CCD, CMOS, TFA or cathode ray technology.

## Revendications

1. Procédé pour identifier des erreurs de transmission dans une installation de surveillance avec transmission d'images en temps réel dans le domaine de la technique de sécurité, constituée par une unité formant caméra (1), une unité (2) de traitement de signaux, une unité d'affichage (3) et une section de transmission (4), la zone visuelle contrôlée par l'unité formant caméra (1) étant reproduite sur l'unité d'affichage (1), **caractérisé en ce que**
que dans l'unité formant caméra (1), un signal supplémentaire, qui varie au rythme de trames définies est inséré dans le signal vidéo enregistré par l'unité formant caméra (1) en amont d'une première unité (12) de mémoire d'images, le nombre des trames est égal à au moins un et est limité vers des valeurs plus élevées par le fait qu'une évaluation aval automatique doit réagir au moins pendant un intervalle de temps admissible dans des installations de sécurité, et dans l'unité d'affichage (3) est disposé un circuit formant détecteur (31), au moyen duquel ce signal inséré est détecté et contrôlé et, lorsque le signal inséré ne varie pas à la fréquence alternative fixée, ce fait est signalé.

2. Procédé selon la revendication 1, **caractérisé en ce que** dans le cas d'une absence de modification du signal inséré à la fréquence alternative fixée, l'unité d'affichage (3) est commutée sur l'état sombre.

3. Procédé selon la revendication 1 ou 2, **caractérisé en ce que** dans l'unité d'affichage (3), lors de l'identification d'une erreur par le circuit formant détecteur (32), une caractérisation visuelle est insérée dans le signal vidéo présent et/ou la caractérisation visuelle est identifiable par un utilisateur et est représenté sous la forme d'un texte clignotant ou de traits clignotants sur l'unité d'affichage (3).

4. Procédé selon la revendication 1 ou 2, **caractérisé en ce que** dans le cas d'une identification d'une erreur par le circuit de détection (31), une alarme marquée est déclenchée par un appareil externe et/ou l'appareil externe est agencé sous la forme d'un klaxon, d'une sirène, d'une cloche ou d'une lumière clignotante.

5. Procédé selon la revendication 1 ou 2, **caractérisé en ce que** le signal supplémentaire, variable, est inséré dans une ou plusieurs dites lignes de test à l'intérieur de l'intervalle de suppression d'image ou le signal variable est inséré dans les premières lignes visibles du signal vidéo, qui sont encore situées dans ce qu'on appelle la surinscription sur l'unité d'affichage (3).

6. Procédé selon la revendication 5, **caractérisé en ce que** le signal vidéo est contrôlé par le circuit formant détecteur (32) après la dernière unité de mémoire d'images (31) présente dans l'ensemble du système.

7. Système de contrôle vidéo dans le domaine de la technique de sécurité constitué par une unité formant caméra (1), une section de transmission (4), une unité (2) de traitement de signaux et une unité d'affichage (3), dans lequel l'unité formant caméra (1) est constitué par une unité d'enregistrement (11), une unité de mémoire d'images (12), une unité d'émission (13) et une première unité de commande (14), l'unité (2) de traitement de signaux est constituée par une unité de réception (21), une seconde unité de mémoire d'images (22), une seconde unité de commande (24) et une unité formant amplificateur (23), et l'unité (2) de traitement de signaux est reliée à l'unité d'affichage (3), qui comporte un écran (31) et une logique associée de commande (33) de l'écran (31) avec une troisième unité de mémoire d'images (331), dans lequel l'unité de commande (14) commande l'unité formant caméra (1) et la section de transmission (4) contient une quatrième unité de mémoire d'images (41), **caractérisé en ce que** la première unité de commande (14) insère, en amont de la première unité de mémoire d'images (12), un signal supplémentaire, qui varie lors de chaque enregistrement d'image avec une fréquence alternative fixée, dans le signal vidéo détecté par l'unité d'enregistrement (11), l'unité de commande (14) mémorise temporairement le signal vidéo dans la première unité de mémoire (12) et le transmet par l'intermédiaire de l'unité d'émission (13) et au moyen de la section de transmission (4) à l'unité (2) de traitement du signal, que l'unité (2) de traitement de signaux prépare ce signal pour l'unité d'affichage (3) et l'unité d'affichage (3) représente le signal vidéo avec le signal supplémentaire sur l'écran (31), et un circuit formant détecteur (32) est disposé en aval de la logique de commande (33) de l'écran (31) de l'unité d'affichage (3), qui détecte le signal supplémentaire introduire et délivre un signal d'alarme, lorsque le signal supplémentaire inséré ne varie pas avec la fréquence alternative fixée pour l'ensemble du système et produite dans l'unité d'enregistrement (11).

8. Système de surveillance vidéo selon la revendication 7, **caractérisé en ce que** le circuit formant détecteur (32) commute sur l'état sombre l'écran (31) de l'unité d'affichage (3), lorsque le signal supplémentaire introduit ne varie pas avec la fréquence alternative fixée pour l'ensemble du système alternatif et produite dans l'unité d'enregistrement (11).

9. Système de surveillance vidéo selon la revendication 7 ou 8, **caractérisé en ce que** la première unité de commande (4) introduit le signal supplémentaire dans la partie du signal vidéo, qui est visible sur l'unité d'affichage (3), ou la première unité de commande (4) introduit le signal supplémentaire dans les premières lignes de la partie visible du signal vidéo, mais ces lignes sont encore situées dans ce qu'on appelle la zone de surinscription de l'unité d'affichage (3).

10. Système de surveillance vidéo selon l'une des revendications 7 à 9, **caractérisé en ce que** le signal supplémentaire est un signal alternatif ou un signal clignotant ayant une fréquence alternative pouvant être fixé de façon précise.

11. Système de surveillance vidéo selon l'une des revendications 7 à 10, **caractérisé en ce que** la première unité de commande (14) introduit le signal supplémentaire avec au moins l'une des lignes de test désignées de façon précise et qui sont valables lors de la normalisation pour de tels signaux vidéo, à l'intérieur des intervalles vides de sortie du signal vidéo.

12. Système de surveillance vidéo selon l'une des revendications 7 à 11, **caractérisé en ce que** la fréquence alternative est inférieure d'un facteur à la fréquence alternative d'images prédéterminée dans la norme vidéo utilisée du système de surveillance, et dans lequel dans le cas d'une évaluation automatique, le facteur possède au moins la valeur un et est limité au maximum par l'évaluation automatique à l'intérieur d'un intervalle de temps compatible dans des installations de sécurité et, dans le cas d'une évaluation visuelle, doit être nettement supérieur à la valeur un afin qu'il apparaisse une fréquence alternative qui puisse être bien identifiée et évaluée par l'oeil humain.

13. Système de surveillance vidéo selon l'une des revendications 7 à 12, **caractérisé en ce que** le circuit formant détecteur (31) introduit sur l'écran (33) de l'unité d'affichage (3) une caractérisation visuelle dans l'image présente et la caractérisation visuelle est un texte clignotant.

14. Système de surveillance vidéo selon l'une des revendications 7 à 13, **caractérisé en ce que** le circuit formant détecteur (31) déclenche un appareil d'alarme externe et que l'appareil d'alarme externe est un klaxon, une sirène, une cloche ou une lumière clignotante.

15. Système de surveillance vidéo selon l'une des revendications 7 à 14, **caractérisé en ce que** la section de transmission (4) peut être n'importe quelle section connue dans la technique de la transmission vidéo, et dans lequel la section usuelle de câble est agencée sous la forme d'une réalisation coaxiale ou également d'une réalisation bifilaire, sous la forme d'une section de transmission radio, une section de transmission avec une lumière modulée dans l'espace ou d'une section formant guide d'ondes lumineuses, et la transmission est réalisée aussi bien selon une technique analogique et selon une technique numérique et des procédés connus de compression des signaux et de décompression des signaux sont utilisés dans la section de transmission.

16. Système de surveillance vidéo selon la revendication 15, **caractérisé en ce que** la section de transmission travaille avec une lumière modulée, un rayonnement infrarouge ou un rayonnement ultraviolet et/ou que la compression et/ou la décompression des signaux agit selon le procédé MPEG.

17. Système de surveillance vidéo selon l'une des revendications 7 à 16, **caractérisé en ce que** l'unité d'enregistrement (11) comporte une unité formant transducteur pour convertir des informations d'images optiques en des signaux électriques, et la conversion s'effectue à l'aide de capteurs d'images et les capteurs d'images travaillent selon la technique CCD, CMOS, TFA ou la technique à faisceau cathodique.
